Europäisches Patentamt

European Patent Office

Office européen des brevets

(19)

(11) **EP 1 045 171 A1**

(12) **EUROPÄISCHE PATENTANMELDUNG**

(43) Veröffentlichungstag:
**18.10.2000 Patentblatt 2000/42**

(51) Int Cl.⁷: **F16H 55/08**, F16H 3/22

(21) Anmeldenummer: **99107511.0**

(22) Anmeldetag: **15.04.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **Ford Global Technologies, Inc., A subsidiary of Ford Motor Company Dearborn, Michigan 48126 (US)**

(72) Erfinder: **Mohr, Christian 54290 Trier (DE)**

(74) Vertreter: **Drömer, Hans-Carsten, Dipl.-Ing. et al Ford-Werke Aktiengesellschaft, Patentabteilung NH/DRP 50725 Köln (DE)**

(54) **Umkehr-Schieberad-Anordnung für ein Wechselgetriebe**

(57)     Bei einer Umkehr-Schieberad-Anordnung für ein Wechselgetriebe, bei dem das geradverzahnte oder schrägverzahnte Umkehr-Schieberad (2) auf einer Schieberadachse (B) axial verschiebbar angeordnet ist und zum Bewirken einer Drehrichtungsumkehr zwischen einer Eingangswelle auf der Achse (A) und einer Ausgangswelle auf der Achse (C) in Eingriff mit einem Zahnrad (1) auf der Eingangswelle (A) und einem Zahnrad (3) auf der Ausfangswelle (C) bringbar ist und die in Einschieberichtung (S) liegenden Stirnkanten der Zähne der beteiligten Zahnräder (1,2 und 3) mit sogenannten Anspitzungen oder Abdachungen (4,5 und 6 sowie 7) in unterschiedlichen Gruppen mit axialen Zurücknahmen zum Erleichtern des Einspurens versehen sind, sind an den mit dem Umkehr-Schieberad (2) zusammenwirkenden Zahnrädern (1 und 3) die Vorderkanten bzw. Schneidenkanten der Anspitzungen (4 bzw. 7) um eine radiale Zurücknahme zurückgenommen, deren Durchmesser sich aus einer Formel ergibt.

FIG. 3

EP 1 045 171 A1

**Beschreibung**

Die Erfindung bezieht sich auf eine Umkehr-Schieberad-Anordnung für ein Wechselgetriebe der im Oberbegriff des Patentanspruches 1 erläuterten Art.

Aus der EP 0 547 632 A1 ist eine Umkehr-Schieberad-Anordnung für ein Wechselgetriebe der im Oberbegriff erläuterten Art bekannt, bei der die an den Stirnkanten der Zahnräder vorgesehenen Anspitzungen oder Abdachungen an jedem zweiten Zahn um ein axiales Maß zurückgenommen sind und auch die Anspitzungen oder Abdachungen an zwei aufeinanderfolgenden Zähnen mit unterschiedlichen Winkeln ihrer Schneidenkante ausgebildet sind.

Dadurch kann es beim sogenannten Einspuren des Umkehr-Schieberades nicht mehr zu einem das Einspuren sehr behindernden Doppelkontakt von zwei aufeinanderfolgenden Schneidenkanten kommen und der Einspurvorgang wird erleichtert.

Aus der DE 36 40 450 A1 ist eine weitere Umkehr-Schieberad-Anordnung für ein Wechselgetriebe der im Oberbegriff des Patentanspruches 1 erläuterten Art bekannt, bei der die an den miteinander in Eingriff zu bringenden Stirnkanten der Zahnräder ausgebildeten Anspitzungen oder Abdachungen Vorderkanten bzw. Schneidenkanten aufweisen, die um eine radiale Zurücknahme verkürzt sind, wobei diese radiale Zurücknahme bis zu den geometrischen Berührungspunkten der aufeinandertreffenden Schneidenkanten erfolgt.

Die radiale Zurücknahme erfolgt hierbei durch eine sich vom geometrischen Berührungspunkt in einem flacheren Winkel erstreckenden Fläche, die durch die Anspitzung oder Abdachung in Verbindung mit der Zahnform eine fünfeckige Fläche darstellt.

Aus der früheren Patentanmeldung 98 10 70 96.4 vom 18. April 1998 ist auch bereits eine Umkehr-Schieberad-Anordnung für ein Wechselgetriebe bekannt, bei der die in den beiden vorgenannten Schriften aufgezeigten Maßnahmen zum Verbessern des Einspurens eines Umkehr-Schieberades in Kombination angeordnet sind, d.h., es wird dort sowohl die axiale Zurücknahme der Anspitzung oder Abdachung an jeweils zwei aufeinanderfolgenden Zahnrädern in Kombination mit der radialen Zurücknahme der Vorderkante oder Schneidenkante vorgeschlagen.

Die Aufgabe der vorliegenden Erfindung ist es, daß Einspuren eines Umkehr-Schieberades so weit zu verbessern, daß möglichst eine Blockierrate von 0 erreicht wird und daß darüber hinaus die Herstellung der entsprechenden Zurücknahmen an den verschiedenen miteinander zusammenwirkenden Zahnrädern in kostengünstiger und robuster Weise ermöglicht wird.

Gemäß der Erfindung wird diese Aufgabe gelöst, indem bei einer Umkehr-Schieberad-Anordnung für ein Wechselgetriebe nach dem Oberbegriff des Patentanspruches 1, die im Kennzeichenteil des Patentanspruches 1 aufgezeigten Merkmale angewendet werden.

In den weiteren Patentansprüchen sind weitere zweckmäßige Ausgestaltungen der Erfindung erläutert.

Zwei weitere, auf die gleichen Erfindungsgedanken aufbauende Ausführungsformen sind in unabhängigen Nebenansprüchen aufgezeigt.

Dadurch, daß die miteinander in Eingriff kommenden drei Zahnräder an einem Zahnrad Anspitzungen oder Abdachungen mit einer axialen Zurücknahme an jeden zweiten Zahn aufweisen und an den beiden anderen der drei miteinander zusammenwirkenden Zahnräder die radiale Zurücknahme jeweils durch einen zylindrischen Absatz mit einem bestimmten Durchmesser gebildet wird, der sich durch eine Formel 1, aus den Zähnezahlen der miteinander in Eingriff kommenden Zahnräder, dem Achsabstand und der axialen Zurücknahme errechnen läßt, kann die erforderliche radiale Zurücknahme bereits bei der Herstellung der Rohlinge der Zahnräder durch eine Drehkontur bereitgestellt werden.

In ähnlicher Weise wird nach der weiteren Ausführungsform der Erfindung eine Drehkontur als Ersatz für die Anspitzung in Verbindung mit einer völlig einseitigen Anfasung vorgeschlagen, wodurch auch hier die Herstellung kostenmäßig wesentlich günstiger wird.

In ebenfalls ähnlicher Weise kann in einer weiteren Ausführungsform mit gleich oder unterschiedlich geneigten Anfasungen und eventuell aus der Zahnmitte verschobener Schneidkante bei gleichzeitiger Anbringung einer dreistufigen radialen Zurücknahme ein Doppelkontakt vermieden bzw. eine asymmetrische Doppelkontaktkonstellation im Grenzfall erzeugt und Blockierfreiheit gewährleistet werden.

Die Erfindung wird anhand der in den Zeichnungen gezeigten Ausführungsbeispiele näher erläutert. Es zeigt:

Fig. 1    eine schematische Darstellung einer Umkehr-Schieberad-Anordnung für ein Wechselgetriebe in Achsansicht;

Fig. 2    eine schematische Getriebeaufrollung der miteinander zusammenwirkenden Zahnräder, wobei das Zahnrad auf der Eingangswelle und das Zahnrad auf der Ausgangswelle nur je zur Hälfte dargestellt sind;

Fig. 3    eine Ansicht des Zahnrades auf der Eingangswelle mit entsprechenden Ansichten und Schnitten durch die Anspitzung oder Abdachung eines Zahnes;

Fig. 4 eine Ansicht des Schieberades mit entsprechenden Schnitten und Ansichten seiner unterschiedlichen Anspitzungen und Zurücknahmen an den verschiedenen Zähnen;

Fig. 5 eine Ansicht des Zahnrades auf der Ausgangswelle mit entsprechenden Ansichten und Schnitten der Anspitzung oder Abdachung eines Zahnes;

Fig. 6 eine Ansicht des Zahnrades auf der Eingangswelle mit entsprechenden Ansichten und Schnitten durch die Anspitzung oder Abdachung eines Zahnes einer weitere Ausführungsform und

Fig. 7 eine Ansicht des Zahnrades auf der Eingangswelle mit entsprechenden Ansichten und Schnitten durch die Anspitzung oder Abdachung eines Zahnes einer weiteren Ausführungsform.

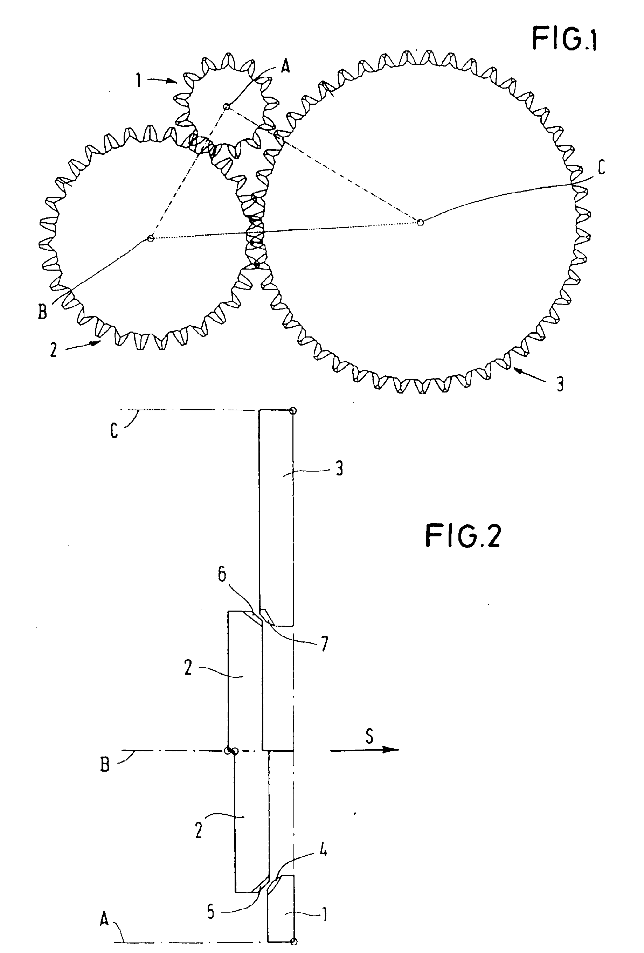

In Fig. 1 sind die entsprechenden Achsen der Eingangswelle, der Schieberadachse und der Ausgangswelle mit A, B und C bezeichnet.

Ein Zahnrad 1 ist hierbei auf einer Eingangswelle (nicht gezeigt) mit der Achse A angeordnet. Ein Schieberad 2 ist auf einer Schieberadachse (nicht gezeigt) auf der Achse B angeordnet und ein Zahnrad 3 ist auf einer Ausgangswelle (nicht gezeigt) auf der Achse C angeordnet.

Die Einschieberichtung bzw. Einspurrichtung des Umkehr-Schieberades 2 ist in Fig. 2 mit einem Pfeil S angegeben.

Die Stirnkanten der Verzahnungen der miteinander in Eingriff zu bringenden Zahnräder 1, 2 und 3 weisen in an sich bekannter Weise Anspitzungen oder Abdachungen 4, 5 und 6 und 7 auf. Am Umkehr-Schieberad 2 sind hierbei zwei unterschiedliche Anspitzungen 5 und 6 vorgesehen, die sich dadurch unterscheiden, daß die eine Anspitzung auf jedem zweiten Zahn um einen bestimmten Betrag X bzw. an dem letzten ungeraden Zahn um einen Betrag X' zurückgenommen ist.

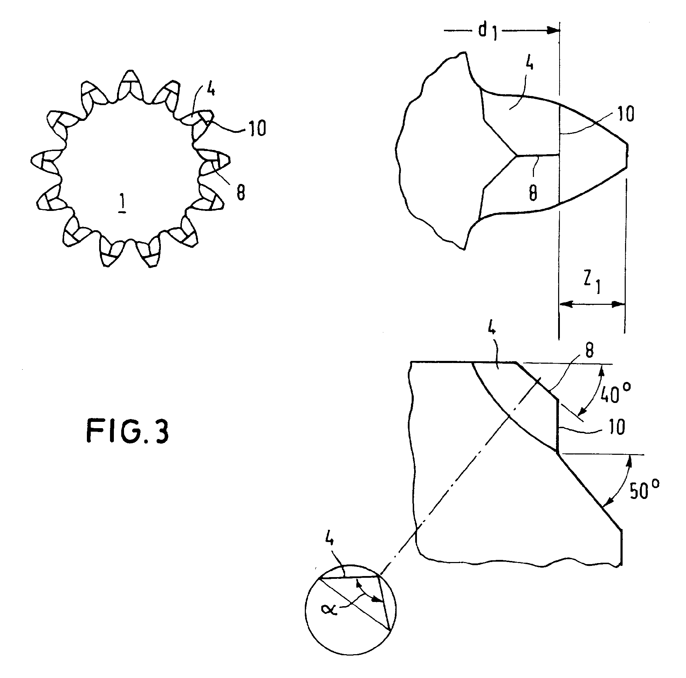

In den Figuren 3 bis 5 werden die besonderen Anspitzungen am Zahnrad 1 auf der Eingangswelle, auf dem Umkehr-Schieberad 2 auf der Schieberadachse und auf dem Zahnrad 3 auf der Ausgangswelle im Detail erläutert.

In Fig. 3 ist eine Ansicht des Zahnrades 1 mit Angabe der Zähnezahlen gezeigt und rechts davon ist eine Ansicht eines einzelnen Zahnes in Verbindung mit einem Schnitt entlang der Zahnachse und mit einem Schnitt senkrecht zur Anspitzung gezeigt.

Aus dieser Ansicht und dem Schnitt ergibt sich durch eine Durchmesserangabe der Startpunkt, der Vorderkante bzw. Schneidenkante der Anspitzung, die gemäß der Erfindung durch eine zweite Durchmesserangabe die auf einem zylindrischen Absatz hin verweist, radial zurückgenommen ist. Der Durchmesser des zylindrischen Absatzes ergibt sich hierbei durch die nachfolgende Formel 1 und die radiale Zurücknahme ist mit Z1 angegeben.

Formel 1: Die Formel besteht aus zwei Gleichungen mit zwei Unbekannten. Diese liefern z.B. mit Hilfe eines Iterationsprozesses die gesuchten Werte mit beliebiger Genauigkeit. Dargestellt sind die Gleichungen für das System Zahnrad 1 und 2.

$$2\,\pi\left(\frac{1}{ZZ1}+\frac{1}{ZZ2}\right)=\arccos\frac{a12^2-\left(r2+ZR\right)^2-\left(\frac{1}{2}d1\right)^2}{d1\cdot\left(r2+ZR\right)}+\arccos\frac{a12^2-r2^2-\left(\frac{1}{2}d1\right)^{2\prime}}{d1\cdot r2}$$

$$d1=\sqrt{2}\cdot\sqrt{\frac{\left(r2+ZR\right)^2+r2^2-2\left(r2+ZR\right)\cdot r2\cdot\cos\left(\frac{2\,\pi}{ZZ_2}\right)}{\left(1-\cos\left(\frac{2\,\pi}{ZZ_1}\right)\right)}}$$

Hierbei bedeuten:

ZZ1 Zähnezahl Zahnrad 1 (z.B. 13)
ZZ2 Zähnezahl Zahnrad 2 (z.B. 31)

ZZ3 Zähnezahl Zahnrad 3 (z.B. 47)
a12 Achsabstand 1 zu 2 (z.B. 47.5 mm)
a23 Achsabstand 2 zu 3 (z.B. 85.0 mm)
ZR radiale Zurücknahme Zahnrad 2 (z.B. 1.0 mm)
Axiale Zurücknahme X = ZR · tan Θ (Winkel der Schneidkante Zahnrad2 - hier 50°)
d1 reduzierter Anspitzungsdurchmesser Zahnrad 1
d3 reduzierter Anspitzungsdurchmesser Zahnrad 3
r2 Kontaktradius Zahnrad 2 mit Verzahnung Zahnrad 1 / 3 (Hilfsgröße)
Radiale Zurücknahme Z1 = Zahnkopfradius Zahnrad 1 - d1
Radiale Zurücknahme Z3 = Zahnkopfradius Zahnrad 3 - d3

Folgende Ergebnisse sind mit oben angegebenen Beispielwerten berechnet:

Für System Zahnrad 1-2: d1 = 28.9 mm (r2 = 33.3 mm)
Für System Zahnrad 2-3: d3 = 103.4 mm (r2 = 33.3 mm)

Die Anspitzung 4 weist hierbei einen Scheitelwinkel a auf, der vorzugsweise zwischen 90° und 100° liegt.

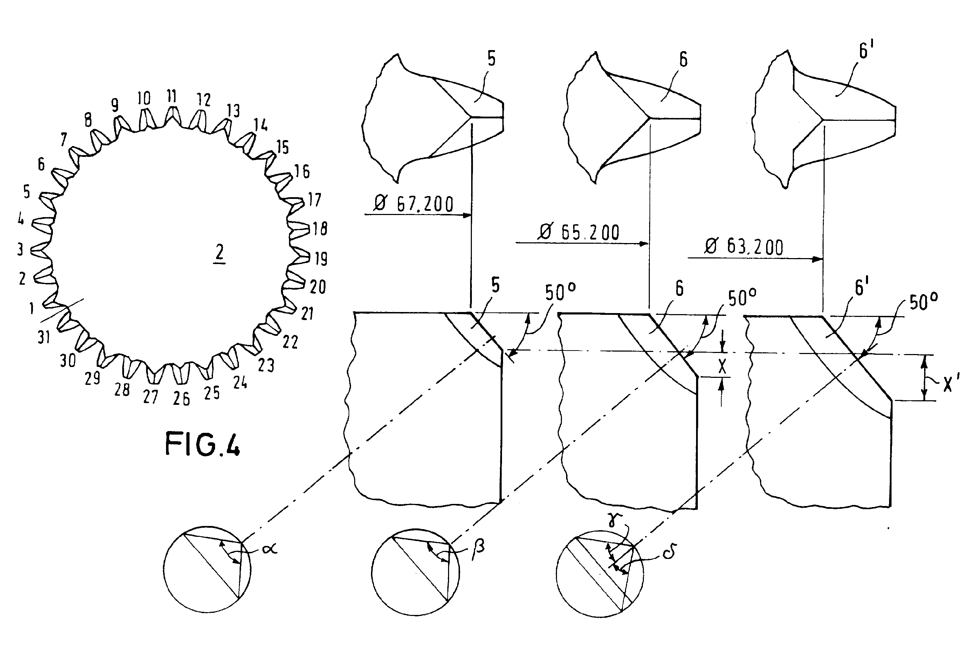

In Fig. 4 ist eine Ansicht des Umkehr-Schieberades 2 mit Angabe der Zähnezahl gezeigt, das zwei unterschiedliche Anspitzungen 5 und 6 bzw. 6' aufweist. Rechts vom Schieberad 2 sind Ansichten der Anspitzungen mit jeweils einem Schnitt entlang der Zahnachse und einem Schnitt senkrecht zur Anspitzung angeordnet, aus der die unterschiedlichen Anspitzungen besser hervorgehen.
Wie aufgezeigt ist, weisen die ungeraden Zähne 1 bis 29 einen Anspitzung 5 auf, die z.B. einen Scheitelwinkel von α in der Größenordnung von 90° bis 100° aufweist.
Die geraden Zähne 2 bis 30 weisen eine Anspitzung 6 auf, die um ein Maß X axial zurückgenommen ist und die z.B. einen Scheitelwinkel von β von 90° aufweisen können und im ungünstigen Fall einer ungeraden Zähnezahl ist der letzte Zahn 31 mit einer Anspitzung 6' versehen, die um ein anderes Maß X' axial zurückgenommen ist.
Zusätzlich wird durch den vertikalen Schnitt durch die Anspitzung 6' darauf hingewiesen, daß jede der Anspitzungen 5, 6 und 6' auch asymmetrisch ausgeführt werden kann, indem unterschiedliche Winkel γ und δ vorgesehen werden.

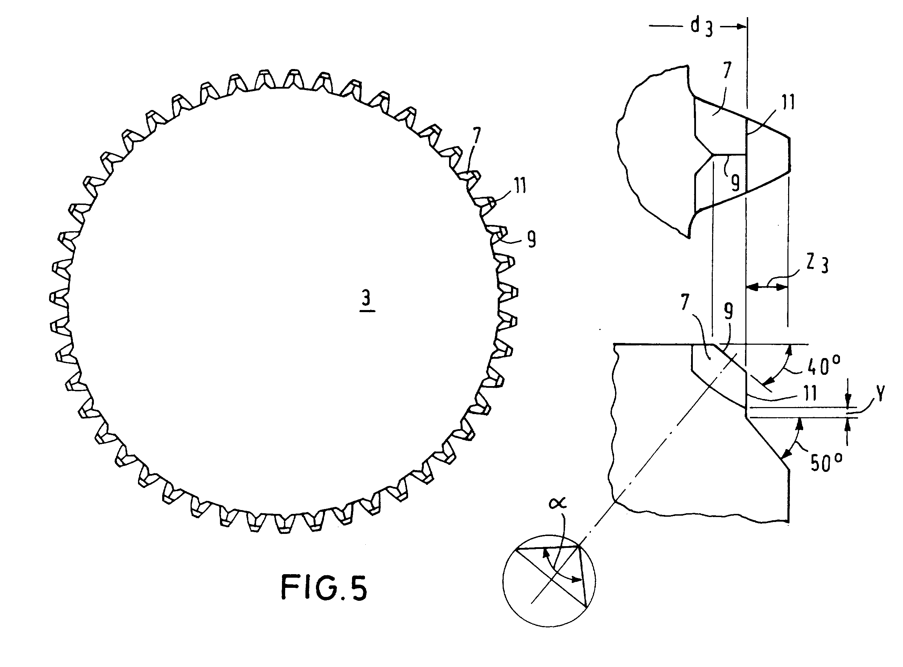

In Fig. 5 ist wieder eine Ansicht des Zahnrades 3 mit Angabe der Zähnezahlen gezeigt und rechts davon sind vergrößerte Ansichten und Schnitte durch die Anspitzung gezeigt. Die Anspitzung 7 kann wieder einen bestimmten Scheitelwinkel α aufweisen, wodurch sich ein Startdurchmesser für die Vorderkante bzw. Schneidenkante ergeben würde, der normalerweise bis zur vollen Zahnhöhe verlaufen würde.
Gemäß der Erfindung ist jedoch diese Vorderkante bzw. Schneidenkante 9 der Anspitzung 7 durch einen zylindrischen Absatz 11 auf einen Durchmesser zurückgenommen, der sich aus der vorhergehend genannten Formel 1 unter Einsatz der für dieses Zahnrad geltenden Daten ergibt und der in Fig. 5 als eine radiale Zurücknahme Z3 angegeben ist. Der zylindrische Absatz 11 soll sich hierbei vorzugsweise um einen Betrag Y über das Ende der Anspitzung 7 hinauserstrecken. Anschließend kann der Zahnkopf angefast sein.

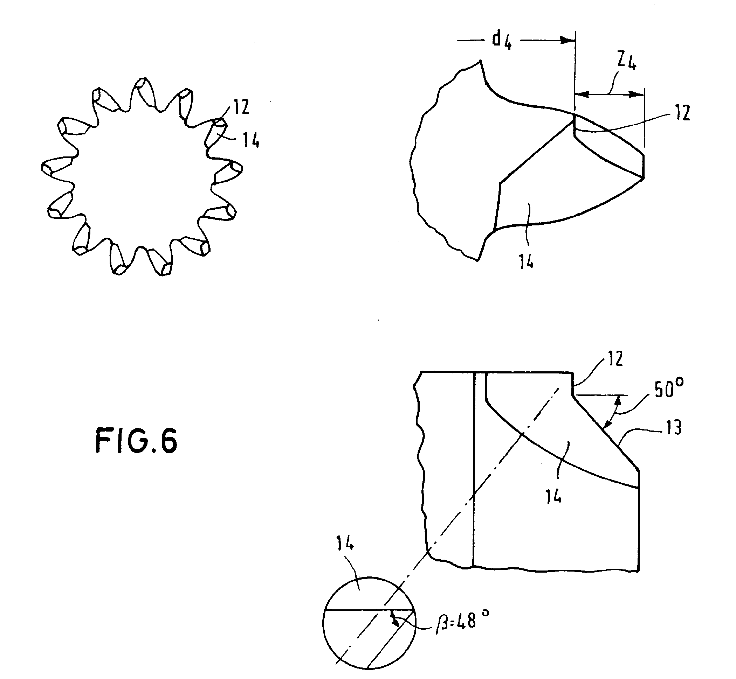

In Fig. 6 ist eine weitere Ausführungsform einer möglichen Anspitzung für Zähne eines Zahnrades auf der Eingangswelle gezeigt, wobei diese Anspitzung nun nurmehr aus einer einem zylindrischen Absatz 12 und einer einen Neigungswinkel aufweisenden Drehkontur 13 an der Stirnkante des Zahnes und einer sich anschließenden völlig asymmetrischen Fräsfläche 14 ergibt. Der Durchmesser d4 kann dabei die Werte d1, d3 oder r2 der Formel 1 annehmen, je nachdem für welches Zahnrad diese Ausführungsform zur Anwendung kommt.
Eine solche Ausführungsform macht eine weitere Verbilligung der Herstellung von Zahnrädern eines Umkehr-Schieberad-Systems möglich und sichert durch die Vermeidung von symmetrischen Anspitzungen den sogenannten Ratscheneffekt, der bei schnellem Schalten in den Rückwärtsgang auftreten kann. Durch die völlige Einseitigkeit der Fräsfläche 14 im Zusammenwirken mit der Drehkontur 12 und 13 wird bei schnellem Schalten in den Rückwärtsgang ein sicheres Einspuren ermöglicht.

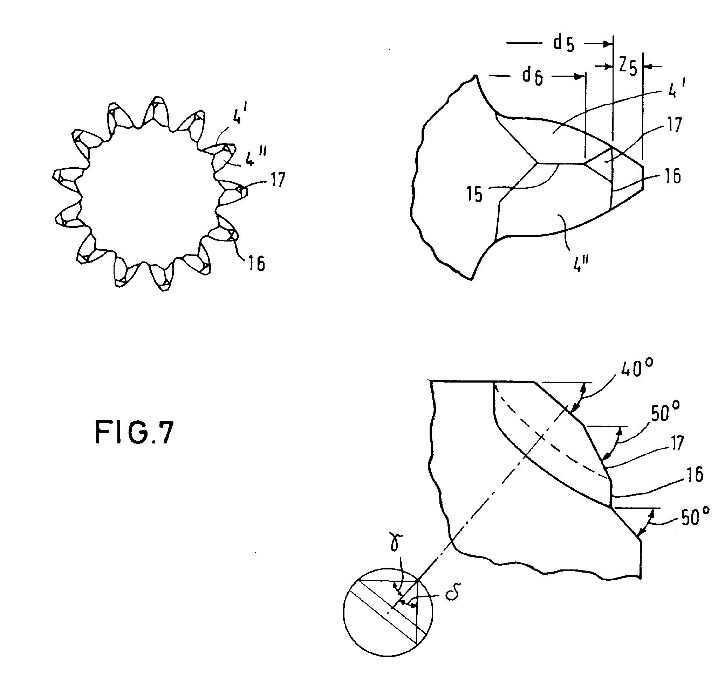

In Fig. 7 ist eine weitere Ausführungsform einer Anspitzung an einem Zahnrad auf einer Eingangswelle gezeigt, wobei die Anspitzung hier asymmetrisch ausgeführt ist und die Schneidenkante 15 durch eine Abfasung 17 gekürzt ist mit der sie in den zylindrischen Absatz 16 der radialen Zurücknahme Z5 übergeht.
Es muß noch darauf hingewiesen werden, daß die in den Fig. 6 und 7 aufgezeigten Ausführungsformen selbstverständlich auch am Umkehr-Schieberad, als auch am Zahnrad an der Ausgangswelle sinngemäß angewendet werden können.

**Patentansprüche**

1. Umkehr-Schieberad-Anordnung für ein Wechselgetriebe, bei dem das geradverzahnte oder schrägverzahnte Umkehr-Schieberad (2) auf einer Schieberadachse (B) axial verschiebbar angeordnet und zum Bewirken einer Drehrichtungsumkehr zwischen einer Eingangswelle auf einer Achse (A) und einer Ausgangswelle auf einer Achse (C) in Eingriff mit einem Zahnrad (1) auf der Eingangswelle (A) und einem Zahnrad (3) auf der Ausgangswelle (C) bringbar ist und wobei die in Einschiebrichtung (S) liegenden Stirnkanten der Zähne der beteiligten Zahnräder (1, 2 und 3) mit sogenannten Anspitzungen oder Abdachungen (4, 5 und 6 sowie 7) zum Erleichtern des Einspurens versehen sind und wobei unterschiedliche Gruppen von Zähnen mit unterschiedlichen Anspitzungen (5 und 6) mit unterschiedlichen axialen Zurücknahmen (x) versehen sein können,
   d**adurch gekennzeichnet**, daß

   - an den beiden anderen der drei miteinander in Eingriff zu bringenden Zahnräder (1 und 3) die Vorderkante bzw. Schneidenkante (8 und 9) der Anspitzungen (4 und 7) durch einen zylindrischen Absatz (10 bzw. 11) um eine bestimmte radiale Zurücknahme (Z1 bzw. Z3) auf einen bestimmten Durchmesser (d1 und d3) zurückgenommen sind, der sich aus der Formel 1 (siehe Beschreibung) ergibt.

2. Umkehr-Schieberad-Anordnung nach dem Oberbegriff des Patentanspruches 1,
   **dadurch gekennzeichnet**, daß

   - an einem der drei miteinander in Eingriff zu bringenden Zahnräder (2) die Stimkanten der Zähne mit unterschiedlichen Anspitzungen (5 und 6) mit unterschiedlichen axialen Zurücknahmen (x) versehen sind und
   - an den beiden anderen der drei miteinander in Eingriff zu bringenden Zahnräder (1 und 3) die Vorderkante bzw. Schneidenkante (8 und 9) der Anspitzungen (4 und 7) durch einen zylindrischen Absatz (10 bzw. 11) um eine bestimmte radiale Zurücknahme (Z1 bzw. Z3) auf einen
   - bestimmten Durchmesser (d1 und d3) zurückgenommen sind, die sich aus der Formel 1 (siehe Beschreibung) ergibt

3. Umkehr-Schieberad-Anordnung nach einem der Ansprüche 1 oder 2,
   **dadurch gekennzeichnet**, daß

   - die ungeraden Zähne (z.B. 1 bis 29) des Umkehr-Schieberades (2) mit einer Anspitzung (5) mit einem bestimmten Neigungswinkel ($\alpha$) versehen sind und
   - die geraden Zähne (z.B. 2 bis 30) mit einer Anspitzung (6) mit einem anderen Scheitelwinkel ($\beta$) versehen sind und bei ungeraden Zähnezahlen (z.B. der Zahn 31) mit einer Anspitzung (6') versehen ist, der ggf unterschiedliche Scheitelwinkel und ggf. eine andere axiale Zurücknahme (X') aufweist.

4. Umkehr-Schieberad-Anordnung nach einem der Ansprüchen 1 oder 2,
   **dadurch gekennzeichnet**, daß
   jede der Abdachungen (5, 6 und 6') asymmetrisch mit unterschiedlichen Winkeln ($\gamma$ und $\delta$) ausgebildet sind.

5. Umkehr-Schieberad-Anordnung nach dem Oberbegriff des Patentanspruches 1,
   **dadurch gekennzeichnet**, daß

   - die miteinander in Eingriff zu bringenden Zahnräder an ihren Stirnkanten mit einer Drehkontur (12/13) und einer völlig asymmetrischen Fräsfläche (14) versehen sind, die einander gegenüberliegend wechselseitig angeordnet sein können.

6. Umkehr-Schieberad-Anordnung nach Anspruch 5,
   **dadurch gekennzeichnet**, daß

   - an einem der drei miteinander in Eingriff zu bringenden Zahnräder (2) die Stirnkanten der Zähne mit unterschiedlichen Anspitzungen (5 und 6) mit unterschiedlichen axialen Zurücknahmen (x) versehen sind und
   - an den beiden anderen der drei miteinander in Eingriff zu bringenden Zahnräder (1 und 3) die Vorderkante bzw. Schneidenkante der Anspitzungen (4 und 7) durch eine Drehkontur bestehend aus einem zylindrischen Absatz (12) (radiale Zurücknahme Z4) auf einen bestimmten Durchmesser (d4), der sich aus der Formel 1 ergibt) und einer Abfasung (13).

**7.** Umkehr-Schieberad-Anordnung nach dem Oberbegriff des Patentanspruches 1,
**dadurch gekennzeichnet**, daß

- an den beiden anderen der drei miteinander in Eingriff zu bringenden Zahnräder (1 und 3) die Vorderkante bzw. Schneidenkante der Anspitzungen (4 und 7) durch eine Abfasung (17) und einen zylindrischen Absatz (16) um eine bestimmte radiale Zurücknahme auf einen bestimmten Durchmesser (d5 und d6) zurückgenommen sind, die sich aus geometrischen Verhältnissen im Zusammenspiel mit den Anspitzungen eines Zwischenrades 2 ergeben.
- dabei kann es vorteilhaft sein die Schneidkante außerhalb der Zahnmitte anzuordnen.

FIG.1

FIG.2

7

FIG.3

EP 1 045 171 A1

FIG.4

Ø 67.200

Ø 65.200

Ø 63.200

5

6

6'

5

6

6'

50°

50°

50°

X

X'

α

β

γ

δ

2

FIG.5

FIG.6

FIG.7

**Europäisches Patentamt**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG |
|---|---|---|---|
| D,A | DE 36 40 450 A (BORG WARNER AUTOMOTIVE) 4. Juni 1987 (1987-06-04) * Spalte 2, Zeile 20 - Spalte 3, Zeile 26; Abbildungen 2-4 * | 1,2,5,7 | F16H55/08 F16H3/22 |
| D,A | EP 0 547 632 A (MITSUBISHI MOTORS CORP) 23. Juni 1993 (1993-06-23) * Spalte 2, Zeile 45 - Zeile 57; Abbildungen 1,3 * | 1,2,5,7 | |
| A | WO 84 02964 A (DOUSSET REMY) 2. August 1984 (1984-08-02) * Seite 2, Zeile 29 - Seite 3, Zeile 10; Abbildungen 2,3 * | 1,2,5,7 | |
| A | DE 12 14 966 B (SIEMENS-SCHUCKERTWERKE AG) 21. April 1966 (1966-04-21) * das ganze Dokument * | 1,2,5,7 | |

**RECHERCHIERTE SACHGEBIETE**

F16H

Der vorliegende Recherchenbericht wurde für alle Patentansprüche erstellt

| Recherchenort | Abschlußdatum der Recherche | Prüfer |
|---|---|---|
| DEN HAAG | 6. September 1999 | Daehnhardt, A |

**ANHANG ZUM EUROPÄISCHEN RECHERCHENBERICHT
ÜBER DIE EUROPÄISCHE PATENTANMELDUNG NR.**

EP 99 10 7511

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-09-1999

| Im Recherchenbericht angeführtes Patentdokument | | Datum der Veröffentlichung | Mitglied(er) der Patentfamilie | | Datum der Veröffentlichung |
|---|---|---|---|---|---|
| DE 3640450 | A | 04-06-1987 | JP | 62132056 A | 15-06-1987 |
| EP 0547632 | A | 23-06-1993 | JP | 5172191 A | 09-07-1993 |
|  |  |  | KR | 9608786 B | 03-07-1996 |
| WO 8402964 | A | 02-08-1984 | FR | 2539478 A | 20-07-1984 |
|  |  |  | EP | 0132264 A | 30-01-1985 |
| DE 1214966 | B |  | KEINE | | |

Für nähere Einzelheiten zu diesem Anhang : siehe Amtsblatt des Europäischen Patentamts, Nr.12/82

EPO FORM P0461